# EUROPEAN PATENT SPECIFICATION

(11) **EP 3 670 483 B1**
(45) Date of publication and mention of the grant of the patent: **26.03.2025**
(21) Application number: 19217138.7
(22) Date of filing: 17.12.2019
(51) Int. Cl.: C05D 3/00, C05D 3/02

(54) **PROCESS FOR THE PRODUCTION OF A LIME FERTILIZER**
VERFAHREN ZUR HERSTELLUNG EINES KALKDÜNGERS
PROCÉDÉ DE PRODUCTION D'UN ENGRAIS CALCAIRE

(30) Priority: 21.12.2018 EP 18215328
(43) Date of publication of application: 24.06.2020
(73) Proprietor: Solvay SA, 1120 Brussels (BE)
(72) Inventor: REH, Uwe, 39218 Schoenebeck (DE); MOERL, Lothar, 39291 Hohenwarthe (DE); BEHNS, Wolfgang, 39291 Hohenwarthe (DE); HAIDA, Hartmut, 39116 Magdeburg (DE); KILLMANN, Jürgen, 06449 Aschersleben (DE)
(74) Representative: Kraus & Lederer PartGmbB

(56) References cited:
- DE-A1- 19 841 500
- DE-C3- 2 552 899
- GB-A- 1 092 184
- GB-A- 164 625

## Description

### BACKGROUND

Soda ash, also known as sodium carbonate, can be obtained either from synthetic routes or from natural brines and deposits containing soda ash. Today, the dominant synthetic route for the production of soda ash is the Solvay process or its variations. The continued success of the Solvay process is also due to the ready availability of the raw materials, salt and limestone. The Solvay process for the production of soda ash could be summarized by the theoretical global equation involving the two main components: sodium chloride and calcium carbonate.

2 NaCl + CaCO₃ → Na₂CO₃ + CaCl₂

In practice this direct way is not possible and it needs the participation of other substances and various different process steps to get the final product, soda ash. First reactions occur in salt solution (brine). First of all, ammonia is absorbed (1) and then, the ammoniated brine is reacted with carbon dioxide to form successive intermediate compounds: ammonium carbonate (2) then ammonium bicarbonate (3). By continuing carbon dioxide injection and cooling the solution, precipitation of sodium bicarbonate is achieved and ammonium chloride is formed (4). Chemical reactions relative to different steps of the process are written below:

**NaCl + H₂O + NH₃ ↔ NaCl + NH₄OH** (1)

**2 NH₄OH + CO₂ ↔ (NH₄)₂CO₃ + H₂O** (2)

**(NH₄)₂CO₃ + CO₂ + H₂O ↔ 2 NH₄HCO₃** (3)

**2 NH₄HCO₃ + 2 NaCl ↔ 2 NaHCO₃ ↓ + 2 NH₄Cl** (4)

Sodium bicarbonate crystals are separated from the mother liquor by filtration, then sodium bicarbonate is decomposed thermally into sodium carbonate, water and carbon dioxide (5).

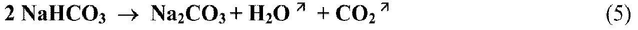

CO₂ is recovered in the carbonation step (see equations 2 and 3 above). Mother liquor is treated to recover ammonia. The ammonium chloride filtrate (4) is reacted with alkali, generally milk of lime (6), followed by steam stripping to recover free gaseous ammonia:

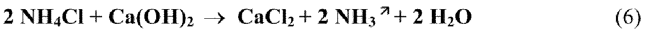

NH3 is recycled to the absorption step (see equation 1 above). Carbon dioxide and calcium hydroxide originate from limestone calcination (7) followed by calcium oxide hydration (8).

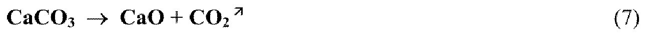

**CaO + H₂O → Ca(OH)₂** (8)

Brine (NaCl) has to be treated before the input in the process to remove impurities: calcium and magnesium. If not removed they would react with alkali and carbon dioxide to produce insoluble salts contributing to scale formation inside equipment. Brine purification reactions are described in the following equations:

**Ca²⁺ + CO₃ ²⁻ → CaCO₃ ↓** (9)

**Mg²⁺ + 2 OH⁻ → Mg(OH)₂↓** (10)

Sodium carbonate formed (equation 5) is called "light soda ash" because its bulk density is approximately 0.5 t/m3. A subsequent operation called densification enables this value to be doubled by crystallisation into sodium monohydrate, by adding water (equation 11) then followed by drying (equation 12). Final product is "dense soda".

**Na₂CO₃ + H₂O -------- > Na₂CO₃.H₂O** (11)

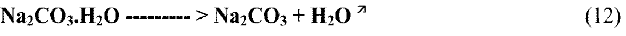

One of the major achievements of the Solvay process is the high efficiency of the ammonia recycle loop. The purpose of this important process "distillation" is to recover ammonia from the ammonium chloride containing mother liquors recovered from the bicarbonate filters/centrifuges. The liquid phase coming out from the distillation unit contains: unreacted sodium chloride (reaction (4) above is not complete due to thermodynamic and kinetic limitations), calcium chloride resulting from reaction with NH₄Cl, solid matter that is derived primarily from the original limestone and finally, small quantity in excess of lime that can ensure a total decomposition of NH₄Cl. This liquid called "DS-liquid" or "Distiller Blow Off DBO" is usually treated in different ways depending on the particular site and processes used.

It is an object of the present invention to further process the distiller waste for a reasonable purpose.

DD 62578 A1 describes a process for removing waste obtained from the production of soda ash for producing lime fertilizers. The process disclosed in DD 62578 A1 comprises mechanically processing residual components from the Solvay process and mixing them with additional components such as gypsum.

DD 233554 A1 describes a process for the production of granulated lime containing fertilizers form waste products.

DD 297391 A5 discloses the nitrogen fertilizer on the basis of lime nitrogen.

DE 2552899 C3 discloses a process for further using waste products from the Solvay process for producing a lime fertilizer.

DE 3600400 C2 discloses a process for conditioning a lime containing slurry, which comprises drying the slurry in a fluidized bed apparatus.

DE 000019841500 A1 discloses the use of a lime slurry from soda ash production for preparing a composition comprising micro-nutrients.

GB 164625A also discloses the production of a fertilizer from waste lime sludge.

The inventors of this application found that a lime fertilizer with advantageous properties can be prepared by desalting the distiller waste from soda ash production, and then mixing the desalted composition with lime pieces and lime powder obtained from soda ash production.

### SUMMARY OF THE INVENTION

The present invention therefore relates to
a process for the production of a lime fertilizer, comprising
   (a) providing an aqueous lime slurry comprising calcium chloride,
   (b) depleting salts in said lime slurry comprising calcium chloride so as to obtain a salt-depleted lime slurry,
   (c) adding lime powder and lime pieces to the salt-depleted lime slurry to obtain a wet mass and optionally adding water, wherein the lime powder has a particle size distribution characterized by a d₅₀ value of from 0.01 mm to 0.05 mm, and the lime pieces have a particle size distribution characterized by a d₅₀ value of from 0.2 to 5 mm,
   (d) mixing and granulating the wet mass to obtain a wet granule, and
   (e) drying the wet granule to obtain a dry granule with a moisture content of from 1 to 10 wt.-% and with a particle size distribution characterized by a d₅₀ value of from 1 to 3 mm, and wherein said lime slurry provided in step (a) comprises distiller waste resulting from the ammonia regeneration step in a process for producing soda ash according to the Solvay process, and the lime slurry is made of solid matter suspended in an aqueous solution, and said solid matter comprises: - at least 1 and at most 70 wt.% Ca(OH)₂,
      - at least 5 and at most 60 wt.% CaCO₃,
      - at least 1 and at most 40 wt.% CaSO₄,
      - at most 15 wt.% Mg(OH)₂,
      - at most 40 wt.%, of other minerals comprising silica, preferably at most 30 wt.%, or at most 20 wt.% of other minerals comprising silica, such as: silica, clays, iron silicate, aluminum silicate, or ettringite, and mixtures thereof,
and so that the sum of above solids components is 100 wt.%.

Furthermore, the present invention relates to the use of the dry granule obtained by the process according to the invention as lime fertilizer, wherein said dry granule comprises at least 25 wt.% of the lime expressed as Ca(OH)₂, and ha a moisture content of from 1 to 10 wt.% and has a particle size distribution characterized by a d₅₀ value of from 1 to 3 mm.

### DRAWINGS

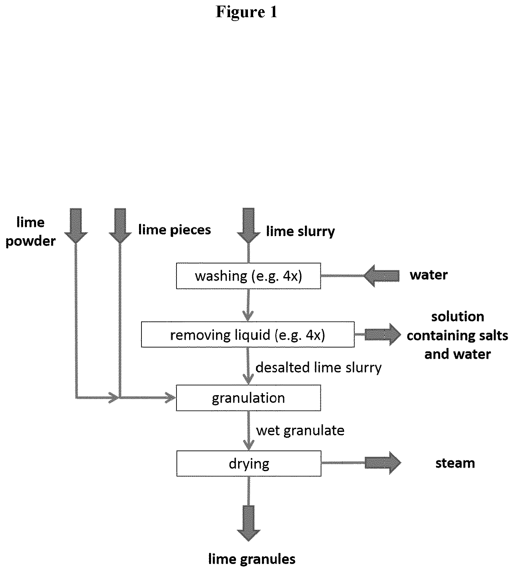

Figure 1 shows a diagram depicting a preferred embodiment of the process of the present invention.
Figure 2A and 2B show the mixing and crushing of lime components using a crusher bucket of an excavator (example 4).

### DETAILED DESCRIPTION

The present invention is directed at a process for the production of a lime fertilizer from by-products obtained during the Solvay process for the production of soda ash. The process of the present invention comprises the uses of three components, lime slurry, lime powder and lime pieces. The process of the invention comprises the following steps:
(a) providing an aqueous lime slurry comprising calcium chloride,
(b) depleting salts in said lime slurry comprising calcium chloride so as to obtain a salt-depleted lime slurry,
(c) adding lime powder and lime pieces to the salt-depleted lime slurry to obtain a wet mass and optionally adding water, wherein the lime powder has a particle size distribution characterized by a d₅₀ value of from 0.01 mm to 0.05 mm, and the lime pieces have a particle size distribution characterized by a d₅₀ value of from 0.2 to 5 mm,
(d) mixing and granulating the wet mass to obtain a wet granule, and
(e) drying the wet granule to obtain a dry granule with a moisture content of from 1 to 10 wt.-% and with a particle size distribution characterized by a d₅₀ value of from 1 to 3 mm, and
wherein the lime slurry provided in step (a) comprises distiller waste resulting from the ammonia regeneration step in a process for producing soda ash according to the Solvay process, and the lime slurry provided in step (a) is made of solid matter suspended in aqueous solution. The solid matter comprises:
- at least 1 and at most 70 wt.% lime expressed as Ca(OH)₂,
- at least 5 and at most 60 wt.% calcium carbonate expressed as CaCO₃,
- at least 1 and at most 40 wt.% calcium sulfate expressed as CaSO₄,
- at most 15 wt.% magnesium hydroxide expressed as Mg(OH)₂,
- at most 40 wt.%, preferably at most 30 wt.% or at most 20 wt.% of other minerals comprising silica, such as: silica, clays, iron silicate, aluminum silicate, ettringite, and mixtures thereof,
and so that the sum of above solid components is 100 wt.%.

More preferably, the solids comprise at least 2, or at least 5, or at least 10, at least 15 wt.%, at least 20 wt.%, at least 25 wt.%, or at least 30 wt.% of Ca(OH)₂. It is further preferred that the solids comprise at most 65, or at most 60, or at most 55 wt.% of Ca(OH)₂. In other embodiments, the solids comprise from 2 to 70, or from 5 to 65, or from 10 to 60, or from 15 to 55 wt.% of Ca(OH)₂.

In further preferred embodiments, the solids comprise at least 10, or at least 15, or at least 25 wt.% of CaCO₃. In another embodiment, the solids comprise at most 45, or at most 40, or at most 35 wt.% of CaCO₃. In other embodiments, the solids comprise from 10 to 45, or from 15 to 40, or from 25 to 35 wt.% of CaCO₃.

Preferably, the amount of CaSO₄ in the solids is at least 2, or at least 3, or at least 4 wt.%. In another embodiment, the amount of CaSO₄ in the solids is at most 35, or at most 30 wt.%. In other embodiments, the amount of CaSO₄ in the solids ranges from 2 to 40, or from 3 to 35, or from 4 to 30 wt.% expressed as weight of CaSO₄ reported to the total weight of the solid. The CaSO₄ mineral present in the solid is generally either anhydrous calcium sulfate (CaSO₄), or hydrated calcium sulfate species such as: calcium sulfate hemihydrate (CaSO₄.0.5 H₂O), or calcium sulfate dihydrate (CaSO₄.2H₂O).

Preferably, the solid matter comprises at least 0.1 wt.% of CaCl₂ and at most 15 wt.%, preferably at most 10 wt.%, more preferably at most 5 wt.%, even more preferably at most 3 wt.% of CaCl₂.

The amount of calcium chloride in the solids is typically in the range from about 1 wt.% to about 10 wt.%.

The solids typically comprise other minerals, such as silica, clays, iron silicate, aluminum silicate, ettringite and combinations thereof.

The amount of these other minerals comprising silica is at most 40 wt.%, preferably at most 30 wt.%, most preferably at most 20 wt.%.

The solid matter suspended in the aqueous solution preferably has a particles size distribution characterized by a d₉₀ value of at most 300 µm. More preferably, the d₉₀ value is at most 200 µm, most preferably, the d₉₀ value is at most 120 µm.

The d₉₀ value can be determined as known in the art, for example according to the standard techniques defined in ISO 13320:2009.

The lime slurry used in the process of the invention is typically washed at least once with water in order to at least partially remove salts from the lime slurry. This can be done by using a decanter, known to one of ordinary skill. Alternatively, the washing and desalting can be carried out in a mixer or reactor, by adding water, mixing, and removing the liquid or supernatant. If this is repeated several times an effective depletion of salts is achieved. The washing step can be carried out at least once, or at least twice, or at least three times, or at least four times, or at least five times. The washing step may be carried out 1 to 10 times, or 2 to 9 times, or 3 to 8 times, or 4 to 7 times, e.g. 4, 5 or 6-times. Typically, the washing step is carried out until the concentration of chlorides (mainly in calcium chloride and sodium chloride species) in the solids of the lime slurry is less than 15%, or less than 10%, or less than 5%, or less than 3%, or less than 1%, or less than 0.5%. Preferably, the washing step is carried out until the concentration of chlorides in the solids of the lime slurry is less than 5 wt.%, more preferably less than 3 wt.%, even more preferably less than 1 wt.%. Indeed, for agriculture fertilizer to be polyvalent to main crop species, the above limited amounts chlorides (as for instance sodium chloride or calcium chloride species) are particularly preferred.

The solid content of the lime slurry after the desalting step is typically from 20 to 50 wt.%.

In one embodiment of the invention, the lime powder is added to the salt-depleted lime slurry in the next step. The lime powder is usually obtained from the de-dusting during lime grinding in the Solvay process. The lime powder has a particle size distribution characterized by the d₅₀ value ranging from about 0.01 mm to 0.05 mm. The lime powder preferably has a residual moisture of less than 10 wt.%, more preferably of less than 5 wt.%, most preferably of less than 3 wt.%.

In an alternative embodiment, lime pieces are added to the salt-depleted lime slurry. The lime pieces are usually obtained from the lime grinding, which takes place before production of milk of lime in the Solvay process. The lime pieces have a particle size distribution characterized by a d₅₀ value ranging from about 0.2 to 5 mm.

In a preferred embodiment, both lime powder and lime pieces are added to the salt-depleted lime slurry. The lime powder and the lime pieces can be added to the salt depleted lime slurry simultaneously or sequentially. The order of the addition is not particularly limited. Though, when no lime pieces is added (ie only lime powder is added to lime slurry) the granulation stage is quite more longer and more-over size distribution of the granules is quite more spread than when lime pieces are also added.

Preferably, the weight ratio of the lime pieces to the lime powder added at step (c) to obtain the wet mass is at least 1:20 and at mot 1:2, more preferably at least 1:10 and at most 1:3.

Furthermore, it is preferred that the weight ratio of aqueous lime slurry to the sum of lime pieces and lime powder is at least 1:9 and at most 1:1.5.

In a preferred embodiment at steps (c) or (d) the weight ranges
- of aqueous lime slurry is from 10 to 40 wt.%,
- of lime pieces is from 5 to 20 wt.%, and
- of lime powder is from 40 to 85 wt.% and so that the sum of above three constituents be 100 %.

After addition of the lime powder and the lime pieces, the composition is usually mixed to obtain a wet mass. The mixing can be carried out in a mixer or reactor device, e.g. a reactor of the company Lödige. In a particular embodiment, water is added before, during, or after the mixing. The wet granule obtained after the mixing usually has a water content of at least 12 wt.%, or at least 15 wt.%. Water is added if this is necessary in order to achieve the minimum water content of the resulting wet granule.

In other embodiments, the wet granule obtained in step (d) has a water content of at most 50 wt.%, or at most 30 wt.%, or at most 25 wt.%. In other embodiments, the wet granule obtained in step (d) has a water content ranging from 12 wt.% to 40 wt.%, or from 15 wt.% to 30 wt.%, or from 18 wt.% to 25 wt.%.

The wet granule is then subjected to a drying step in order to obtain a dry granule. The drying can be carried out by exposing the wet granule to air. It is also possible to accelerate the drying by applying heat to the wet granule. Preferably, the drying is carried out in a fluidized bed device. Such devices are known to the skilled person.

The dry granule has a water content ranging from about 1 to about 10 wt.%. Preferably, the water content of the dry granule is from 2 to 8 wt.%, or from 3 to 6 wt.%.

The dry granule has a particle size distribution characterized by a d₅₀ value from about 1 to about 3 mm.

The lime fertilizer obtainable by a process described herein comprises at least 15 wt.% of lime expressed as calcium hydroxide. Preferably, the lime fertilizer comprises at least 20 wt.%, or at least 25 wt.%, or at least 30 wt.% of lime expressed as calcium hydroxide.

A further aspect of the invention is the use of the dry granule obtained in the process of the invention as lime fertilizer, wherein said dry granule comprises at least 25 wt.% of the lime expressed as Ca(OH)₂, and has a moisture content of from 1 to 10 wt.% and has a particle size distribution characterized by a d₅₀ value of from 1 to 3 mm.

### EXAMPLES

### Example 1

Lime slurry with calcium chloride from the soda ash production was washed four times to reduce the concentration of CaCl₂ to less than 2 wt.%. Thereafter the suspension has been dewatered in a centrifuge to a lime slurry (mud) with about 40% dry matter.

The washed and dewatered lime slurry, lime pieces and lime powder, all obtained as by-products from a plant for the production of soda ash according to the Solvay process, were used to prepare lime granules. The lime slurry was introduced into a laboratory ploughshare mixer LM 20 and washed four times with water. Lime pieces and lime powder were added to the salt-depleted slurry, mixed and granulated. The obtained granules had an average particle size ranging from 2 to 3 mm.

After this lab-scale production had been successfully completed, an upscaled format was carried out using industrial equipment, as described in Example 2.

### Example 2

It should be shown in this experiment that 20 tons of granulate can be produced by the method of the invention. Accordingly, it should be demonstrated that this process can be carried out at an industrial scale.

The following by-products from soda ash production were used:
(a) Lime pieces, obtained from lime grinding before production milk of lime.
(b) Lime powder obtained from the de-dusting step during lime grinding.
(c) Distiller waste from the ammonia regeneration step ("Oelde I") or slurry from ponds where the distiller waste had been deposited at the production site ("Oelde II"). Oelde I is lime slurry produced directly from the distiller waste water washed in a mixer and separated in a horizontal decanter; dry matter max. 60 wt.% after technical dewatering. Oelde II is settled lime slurry from the lime ponds of the industrial settling ponds; dry matter max. 35 wt.%. Oelde I and Oelde II comprise the same compounds and minerals. Composition of the dry matter of Oelde I and Oelde II: 30 - 40 wt.% CaO; 1 - 5wt.% Ca(OH)₂; 5 - 10 wt.% R₂O₃ (Al₂O₃+Fe₂O₃); 1 - 5 wt.% MgO; 2 - 4 wt.% SO₄; 15 - 25 wt.% CO₂; 10 - 15wt.% SiO₂; 2 - 4 wt.% Cl.

The **lime pieces** were obtained from Solvay Chemicals at the plant in Bernburg, Germany. They were sieved with a sieving machine (mesh size 3 mm). The moisture content of the sieved granules was 20.8 wt.%. The particle size distribution after sieving was characterized by d₅₀ values in the range from 0.5 to 2.5 mm.

The **lime powder** was also obtained from Solvay Chemicals in Bernburg and was provided in flexible intermediate bulk containers, referred to as "BigBags" hereinafter. The moisture content of the lime powder was in the range from 1.5 to 2 wt.%. The particles size distribution was characterized by d₅₀ value in the range from 0.027 to 0.031 mm.

The **lime slurry** was first subjected to a washing step and a concentration step. The washing was carried out in order to remove the salt in the lime slurry, particularly the calcium chloride. To do so, the plough share mixer FKM 300 D of the company Lödige Maschinenbau GmbH was used. The lime slurry was transferred into the mixer, water was added and the liquid phase was then removed using the decanter CA 225-00-33 obtained from GEA Westfalia Separator Group in the Technikum Oelde. The lime slurry has been pumped from the mixer to the decanter with a defined quantity. This decanter was equipped with a standard screw and a regulating disk 160. The feeding tube had a length of 515 mm. The decanter was operated with a drum speed of 4,750 min⁻¹ and a screw speed of 8 to 13 min⁻¹. An acceptable result was obtained at a throughput of about 800 liter/h. The clear phase at this throughput rate had a solid content of 210 mg/liter. The clear phase was discarded and the slurry was packaged into barrels, in order to carry out the granulation experiments. The drying loss of the washed and concentrated slurry (average value from 6 samples) was as follows.

**Table 1**

| | Oelde I | Oelde II |
|---|---|---|
| Average drying loss in wt.% | 63.85 | 60.55 |
| Average solid content in wt.% | 36.15 | 39.45 |

As mentioned above, slurry from the deposition pond ("Haldenschlamm" or "Kalkteich") was used as an alternative source for the lime slurry. This slurry was also provided by Solvay Chemicals Bernburg. It was taken from the upper layers of the deposits after a natural dewatering. The residual moisture was 63.85 wt.%, corresponding to a solid content of 36.15 wt.%.

The mixing and granulation of the above mentioned components was carried out batch-wise in the Lödige ploughshare mixer FKM 300. For each batch the following amounts were put into the mixer:
50 kg lime pieces
40 kg lime powder
60 kg of washed and concentrated lime slurry

The components were mixed at a speed of 90 min⁻¹. The blades were operated at a speed of 3,000 min⁻¹. After the mixing, the produced granulate was taken from the mixer and air-dried on the floor of a hall.

In a particular experiment, only two components were used, namely lime slurry and lime powder.

The total amounts of the components and produced granulates were as follows:

**Table 2**

| | |
|---|---|
| Lime slurry (Oelde I and Oelde II) | 441 kg |
| Deposited slurry from pond | 5,634 kg |
| Lime pieces | 1,322 kg |
| Lime powder | 12,540 kg |
| Total (theoretical yield of wet granulate) | 19,937 kg |

Up to 20 batches per day were produced. Assuming an average moisture content of 21 %, the theoretical dry mass of the produced granulates would be 15,750 kg.

The produced granulates were air dried and then filled into BigBags. The total mass of the BigBags measured after filling was 17,450 Kg.

The residual moisture of the wet granulates obtained from the mixture was about 20 to 21 wt.%. The average moisture content of the air-dried granulates was about 4 wt.%, the individual batches ranged from about 2 to about 7 wt.%.

The particle size distribution of the granulates yielded a d₅₀ value of about 2 mm. The sphericity SPHT3 of the dried granulates was at least 0.8, i.e. the form of the particles was close to sphericity. When commercially producing the granulate, the drying in a fluidized bed would appear more suitable. This would allow further reducing the residual moisture of the dried granulates close to 0 % water.

The lime granulates obtained from different batches were analyzed after drying, and the following results were obtained:

**Table 3**

| **Parameter** | **Unit** | **value** | **remark** |
|---|---|---|---|
| drying loss | % | 3.6 | |
| CaO-active | % | 3.0 | |
| CaO | % | 41.2 | based on the dry matter |
| MgO | % | 2.31 | |
| SO₄ | % | 1.33 | |
| PO₄ | % | 0.065 | |
| K | % | 0.26 | |
| Cu | % | 0.001 | |
| Ni | % | 0.002 | |
| Zn | % | 0.002 | |
| Cd | % | <0.0001 | |
| Pb | % | <0.001 | |
| Fe | % | 1.07 | |
| Al | % | 1.34 | |
| Cr | % | 0.001 | |
| Insolubles | % | 12.6 | |
| Cl | % | 0.52 | |
| CO₂ | % | 29.1 | |
| Ammonium-N | % | <0.07 | |
| pH | - | 11.7 | eluate assay |
| NO₃-N | mg/l | 0.971 | |
| NO₂-N | mg/l | 0.043 | |
| N-total | mg/l | 1.287 | |
| Ammonium-N | mg/l | 0.273 | |

**Table 4**

| **Parameter** | **Unit** | **value** | **remark** |
|---|---|---|---|
| drying loss | % | 3.0 | |
| CaO-active | % | 1.4 | |
| CaO | % | 43.8 | based on dry matter |
| MgO | % | 2.36 | |
| SO₄ | % | 1.54 | |
| PO₄ | % | 0.062 | |
| K | % | 0.35 | |
| Cu | % | 0.001 | |
| Ni | % | 0.002 | |
| Zn | % | 0.002 | |
| Cd | % | <0.0001 | |
| Pb | % | <0.001 | |
| Fe | % | 1.10 | |
| Al | % | 1.40 | |
| Cr | % | 0.002 | |
| Insolubles | % | 14.0 | |
| Cl | % | 0.52 | |
| CO₂ | % | 30.4 | |
| Ammonium-N | % | <0.07 | |
| pH | - | 10.8 | eluate assay |
| NO₃-N | mg/l | 0.637 | |
| NO₂-N | mg/l | 0.065 | |
| N-total | mg/l | 0.887 | |
| Ammonium-N | mg/l | 0.185 | |

**Table 5**

| **Parameter** | **Unit** | **value** | **remark** |
|---|---|---|---|
| drying loss | % | 6.49 | |
| CaO-active | % | 13.2 | |
| CaO | % | 43.2 | based on dry matter |
| MgO | % | 2.56 | |
| SO₄ | % | 1.61 | |
| PO₄ | % | 0.065 | |
| K | % | 0.35 | |
| Cu | % | 0.002 | |
| Ni | % | 0.001 | |
| Zn | % | 0.002 | |
| Cd | % | <0.0001 | |
| Pb | % | <0.001 | |
| Fe | % | 1.16 | |
| Al | % | 1.53 | |
| Cr | % | 0.001 | |
| Insolubles | % | 11.8 | |
| Cl | % | 0.32 | |
| CO₂ | % | 29.2 | |
| pH | - | 11.5 | eluate assay |
| NO₃-N | mg/l | 0.443 | |
| NO₂-N | mg/l | 0.059 | |
| N-total | mg/l | 0.819 | |
| Ammonium-N | mg/l | 0.317 | |

**Table 6**

| **Parameter** | **Unit** | **value** | **remark** |
|---|---|---|---|
| drying loss | % | 16.6 | Drying required |
| CaO-active | % | 1.5 | |
| SiO2 | % | 18.1 | based on dry matter |
| CaO | % | 39.6 | |
| MgO | % | 2.14 | |
| SO₄ | % | 0.83 | |
| PO₄ | % | 0.065 | |
| K | % | 0.28 | |
| Cu | % | 0.011 | |
| Ni | % | <0.0005 | |
| Zn | % | 0.0051 | |
| Cd | % | <0.0002 | |
| Pb | % | <0.0020 | |
| Fe | % | 1.05 | |
| Al | % | 2.21 | |
| Cr | % | 0.0004 | |
| Cl | % | 0.44 | |
| CO₂ | % | 33.9 | |
| pH | - | 11.4 | eluate assay |
| NO₃-N | mg/l | 0.372 | |
| NO₂-N | mg/l | 0.031 | |
| N-ges | mg/l | 0.527 | |
| Ammonium-N | mg/l | 0.124 | |

**Table 7**

| **Parameter** | **Unit** | **value** | **remark** |
|---|---|---|---|
| drying loss | % | 18.2 | Drying required |
| CaO-active | % | 1.4 | |
| SiO2 | % | 12.2 | based on dry matter |
| CaO | % | 39.2 | |
| MgO | % | 2.06 | |
| SO₄ | % | 0.85 | |
| PO₄ | % | 0.053 | |
| K | % | 0.20 | |
| Cu | % | 0.005 | |
| Ni | % | <0.0005 | |
| Zn | % | 0.005 | |
| Cd | % | 0.0006 | |
| Pb | % | <0.0020 | |
| Fe | % | 1.0 | |
| Al | % | 2.17 | |
| Cr | % | 0.0003 | |
| Cl | % | 0.22 | |
| CO₂ | % | 34.3 | |
| pH | - | 11.4 | eluate assay |
| NO₃-N | mg/l | 0.645 | |
| NO₂-N | mg/l | 0.029 | |
| N-ges | mg/l | 1.132 | |
| Ammonium-N | mg/l | 0.458 | |

The experiments carried out demonstrate that the waste components obtained during the Solvay process for the production of soda ash can be used for producing granulates with properties which make them easy to store and handle. In particular, the particle size and the moistures obtained ensure good flowability and transportability when residual moisture is between 1 and 10 wt.%. When moisture is above 18 wt.% the granules are sticky. As this behavior is sensitively improved with a residual moisture of at most 15 wt.%, and preferably when at most 10 wt.% it is recommended to dry the product to less than 15 , preferably less than 10 wt.% residual moisture (water).

Though a too intensive-drying (below 1 wt% residual moisture) of the granules, leads to a strong dusting behavior when granules are handled, transported and spread. Therefore advantageously said residual moisture (ie water content) should be in the range from 1 to 15 wt.%, preferably from 1 to 10 wt. %, and more preferably from 2 to 8 wt.%, or from 3 to 6 wt.%.

Chemical analysis showed that the granule contains valuable micro-nutrients (see tables 3 to 7). As a consequence, the granule can be used as a lime fertilizer. After initial experiments had shown the general feasibility of this approach, it was further shown that also the production of 20 tons of granules can be performed.

### Example 3:

### Field trial

The granule obtained in example 2 was distributed on soil. The area was categorized into five different sections, which were applied with 0, 130, 190, 240 and 290 tons of lime fertilizer per hectar, respectively. The application of the lime fertilizer did not adversely affect the pH value of the soil. Further, the use of the lime fertilizer did not negatively affect the growth of the corn.

It was therefore concluded that the granule is useful as a lime fertilizer in agricultural applications.

### Example 4

### Large scale test (1,000 tons of lime fertilizer)

The production of the lime fertilizer was based on the by-products lime slurry, cyclone dust (lime powder) and lime pieces (unburned limestone grid). A ratio of 50/40/10 mass% was chosen for the large scale test.

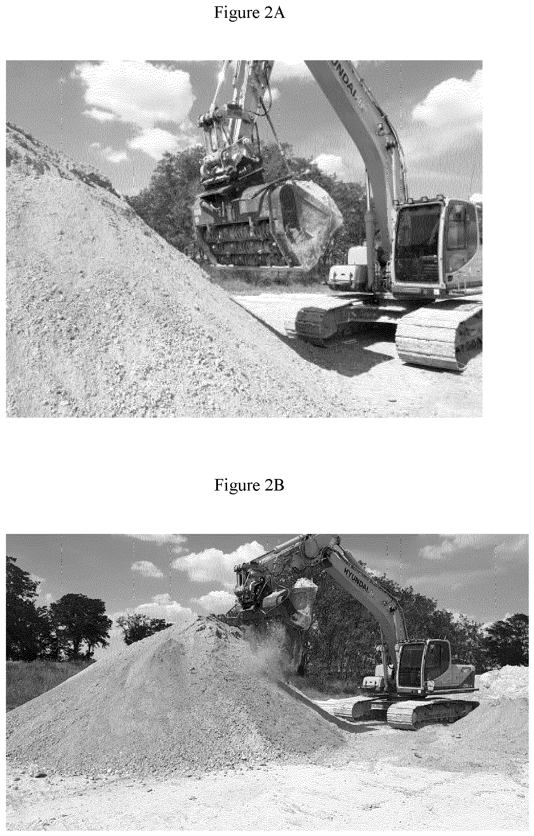

In order to produce a homogeneous blend the individual components were stacked layer by layer with an excavator or wheel loader. After that the material of this storage was dug off with a crusher bucket for excavator or loader. The lime components were mixed and crushed during the transport through the bucket (see Fig. 2A and 2B). Particles/granules of undefined size were obtained which can be passed through a sieve with the desired grain size. A temporary storage is possible or the screening can be done directly after the treatment with the crusher bucket. During the large scale test a double screen-deck was used with a screen cut of 5 mm.

The lime fertilizer was analyzed in a laboratory and had the following composition:

**Table 8**

| **Parameter** | **Unit** | **value** | **Remark** |
|---|---|---|---|
| drying loss | % | 23.65 | |
| | | | |

| **Analysis of dry matter:** | | | |
|---|---|---|---|
| CaO-active | % | 9.5 | causticizing method |
| Calcium | % | 31.2 | ICP |
| Magnesium | % | 1.2 | ICP |
| Sodium | | 0 | ICP |
| SO₄ | % | 1.5 | ICP |
| PO₄ | % | 0 | ICP |
| Potassium | % | 0.2 | ICP |
| Chloride | % | 0.5 | Potentiometry |
| CO₂ | % | 31.2 | Scheibler |
| Insolubles | % | 10.7 | |
| | | | |

| **Analysis of eluate (10% in water):** | | | |
|---|---|---|---|
| pH | - | 11.7 | |
| Cl | mg/l | 460 | Potentiometry |
| NH₄-N | mg/l | 1.21 | |
| NO₃-N | mg/l | 2.34 | |
| NO₂-N | mg/l | 0.09 | |
| N-total | mg/l | 3.64 | |

A field test with 50 tons has been done with a standard fertilizer spreader and the distribution analyzed. The distribution was satisfactory. Optimization should be done to a higher quantity of grain sizes 3 -5 mm. Though the product was sticky when stored in trucks and moved to spreaders. This obliged to frequent cleaning operations during operations. In comparison, part of the production was dried down to a residual moisture of 6 wt %. The corresponding batch showed good handling behavior, and limited dusting when loaded in trucks and sprayed on field.

## Claims

1. A process for the production of a lime fertilizer, comprising
(a) providing an aqueous lime slurry comprising calcium chloride,
(b) depleting salts in said lime slurry comprising calcium chloride so as to obtain a salt-depleted lime slurry,
(c) adding lime powder and lime pieces to the salt-depleted lime slurry to obtain a wet mass and optionally adding water, wherein the lime powder has a particle size distribution **characterized by** a d₅₀ value of from 0.01 mm to 0.05 mm, and the lime pieces have a particle size distribution **characterized by** a d₅₀ value of from 0.2 to 5 mm,
(d) mixing and granulating the wet mass to obtain a wet granule, and
(e) drying the wet granule to obtain a dry granule with a moisture content of from 1 to 10 wt.-% and with a particle size distribution **characterized by** a d₅₀ value of from 1 to 3 mm,
and wherein said lime slurry provided in step (a) comprises distiller waste resulting from the ammonia regeneration step in a process for producing soda ash according to the Solvay process, and the lime slurry is made of solid matter suspended in an aqueous solution, and said solid matter comprises:
- at least 1 and at most 70 wt.% lime expressed as Ca(OH)₂,
- at least 5 and at most 60 wt.% calcium carbonate expressed as CaCO₃,
- at least 1 and at most 40 wt.% calcium sulfate expressed as CaSO₄,
- at most 15 wt.% magnesium hydroxide expressed as Mg(OH)₂,
- at most 40 wt.%, preferably at most 30 wt.% or at most 20 wt.% of other minerals comprising silica, such as: silica, clays, iron silicate, aluminum silicate, or ettringite, and mixtures thereof,
and so that the sum of above solids components is 100 wt.%.

2. The process according to claim 1, wherein the solids suspended in the aqueous solution has a d₉₀ value of at most 300 µm.

3. The process according to any one of the preceding claims, wherein the solid matter comprises at least 0.1 and at most 15 wt.% of CaCl₂.

4. The process according to any one of the preceding claims, wherein said lime powder and lime pieces are by-products from a process for producing soda according to the Solvay process such as: lime powder recovered from de-dusting during lime grinding, or lime pieces taken out from lime grinding before production of milk of lime.

5. The process according to any one of the preceding claims, wherein step (b) comprises washing the lime slurry with water.

6. The process according to claim 1, wherein the salt-depleted lime slurry obtained in step (a) has a solid content from 20 to 50 wt.%.

7. The process according to any one of the preceding claims,
wherein the wet granule obtained in step (d) has a moisture content of at least 12 wt.% and at most 40 wt.%.

8. The process according to any one of the preceding claims,
wherein the wet granule obtained in step (d) has a moisture content of at most 30 wt.% or at most 25 wt.%.

9. The process according to any one of the preceding claims, wherein the weight ratio of lime pieces to lime powder at step (c) or (d) is at least 1:2 and at most 1:20.

10. The process according to any one of the preceding claims, wherein the weight ratio of aqueous lime slurry to the sum of the lime pieces and lime powder is at least 1: 1.5 and at most 1:9.

11. The process according to the preceding claim, wherein at steps (c) or (d) the weight ranges:
- of aqueous lime slurry is from 10 to 40 wt.%
- of lime pieces is from 5 to 20 wt.%
- of lime powder is from 40 to 85 wt.%
and so that the sum of above three constituents be 100 wt.%.

12. Use of the dry granule obtained in the process of any one of the preceding claims as lime fertilizer, wherein said dry granule comprises at least 25 wt.% of the lime expressed as Ca(OH)₂, and has a moisture content of from 1 to 10 wt.% and has a particle size distribution **characterized by** a d₅₀ value of from 1 to 3 mm.

## Patentansprüche

1. Verfahren zur Herstellung eines Kalkdüngers, das Folgendes umfasst:
(a) das Bereitstellen eines Calciumchlorid umfassenden wässrigen Kalkschlamms,
(b) das Abreichern von Salzen in dem Calciumchlorid umfassenden Kalkschlamm, wodurch ein an Salzen verarmter Kalkschlamm erhalten wird,
(c) das Zugeben von Kalkpulver und Kalkstücken zu dem an Salzen verarmten Kalkschlamm, wodurch eine feuchte Masse erhalten wird, und gegebenenfalls das Zugeben von Wasser, wobei das Kalkpulver eine Partikelgrößenverteilung aufweist, die durch einen d₅₀-Wert von 0,01 mm bis 0,05 mm gekennzeichnet ist, und die Kalkstücke eine Partikelgrößenverteilung aufweisen, die durch einen d₅₀-Wert von 0,2 bis 5 mm gekennzeichnet ist,
(d) das Mischen und Granulieren der feuchten Masse, wodurch ein feuchtes Granulat erhalten wird, und
(e) das Trocknen des feuchten Granulats, wodurch ein trockenes Granulat mit einem Feuchtigkeitsgehalt von 1 bis 10 Gew.-% und mit einer Partikelgrößenverteilung erhalten wird, die durch einen d₅₀-Wert von 1 bis 3 mm gekennzeichnet ist,
und wobei der in Schritt (a) bereitgestellte Kalkschlamm Destillationsabfall umfasst, der aus dem Ammoniak-Regenerationsschritt bei einem Verfahren zur Herstellung von wasserfreiem Natriumcarbonat gemäß dem Solvay-Verfahren resultiert und wobei der Kalkschlamm aus einem in einer wässrigen Lösung suspendierten Feststoff besteht und der Feststoff Folgendes umfasst:
- mindestens 1 und höchstens 70 Gew.-% Kalk, ausgedrückt als Ca(OH)₂,
- mindestens 5 und höchstens 60 Gew.-% Calciumcarbonat, ausgedrückt als CaCO₃,
- mindestens 1 und höchstens 40 Gew.-% Calciumsulfat, ausgedrückt als CaSO₄,
- höchstens 15 Gew.-% Magnesiumhydroxid, ausgedrückt als Mg(OH)₂,
- höchstens 40 Gew.-%, vorzugsweise höchstens 30 Gew.-% oder höchstens 20 Gew.-% anderer Siliciumdioxid umfassender Mineralien, wie: Siliciumdioxid, Tone, Eisensilicat, Aluminiumsilicat oder Ettringit und Mischungen davon,
und so, dass die Summe der obigen Feststoffkomponenten 100 Gew.-% beträgt.

2. Verfahren nach Anspruch 1, wobei die in der wässrigen Lösung suspendierten Feststoffe einen d₉₀-Wert von höchstens 300 µm aufweisen.

3. Verfahren nach einem der vorhergehenden Ansprüche, wobei der Feststoff mindestens 0,1 und höchstens 15 Gew.-% CaCl₂ umfasst.

4. Verfahren nach einem der vorhergehenden Ansprüche, wobei das Kalkpulver und die Kalkstücke Nebenprodukte aus einem Verfahren zur Herstellung von Soda gemäß dem Solvay-Verfahren sind, wie: aus einem Entstauben während des Mahlens von Kalk isoliertes Kalkpulver oder Kalkstücke, die beim Mahlen von Kalk vor der Herstellung von Kalkmilch entnommen werden.

5. Verfahren nach einem der vorhergehenden Ansprüche, wobei Schritt (b) ein Waschen des Kalkschlamms mit Wasser umfasst.

6. Verfahren nach Anspruch 1, wobei der in Schritt (a) erhaltene an Salzen verarmte Kalkschlamm einen Feststoffgehalt von 20 bis 50 Gew.-% aufweist.

7. Verfahren nach einem der vorhergehenden Ansprüche, wobei das in Schritt (d) erhaltene feuchte Granulat einen Feuchtigkeitsgehalt von mindestens 12 Gew.-% und höchstens 40 Gew.-% aufweist.

8. Verfahren nach einem der vorhergehenden Ansprüche, wobei das in Schritt (d) erhaltene feuchte Granulat einen Feuchtigkeitsgehalt von höchstens 30 Gew.-% oder höchstens 25 Gew.-% aufweist.

9. Verfahren nach einem der vorhergehenden Ansprüche, wobei das Gewichtsverhältnis von Kalkstücken zu Kalkpulver in Schritt (c) oder (d) mindestens 1:2 und höchstens 1:20 beträgt.

10. Verfahren nach einem der vorhergehenden Ansprüche, wobei das Gewichtsverhältnis von wässrigem Kalkschlamm zur Summe der Kalkstücke und des Kalkpulvers mindestens 1:1,5 und höchstens 1:9 beträgt.

11. Verfahren nach dem vorhergehenden Anspruch, wobei in den Schritten (c) oder (d) die Gewichtsbereiche:
- von wässrigem Kalkschlamm 10 bis 40 Gew.-% betragen
- von Kalkstücken 5 bis 20 Gew.-% betragen
- von Kalkpulver 40 bis 85 Gew.-% betragen
und so, dass die Summe der drei Bestandteile 100 Gew.-% beträgt.

12. Verwendung des beim Verfahren nach einem der vorhergehenden Ansprüche erhaltenen trockenen Granulats als Kalkdünger, wobei das trockene Granulat mindestens 25 Gew.-% des als Ca(OH)₂ ausgedrückten Kalks umfasst und einen Feuchtigkeitsgehalt von 1 bis 10 Gew.-% aufweist und eine Partikelgrößenverteilung aufweist, die durch einen d₅₀-Wert von 1 bis 3 mm gekennzeichnet ist.

## Revendications

1. Procédé pour la production d'un engrais à base de chaux, comprenant
(a) la fourniture d'une suspension aqueuse de chaux comprenant du chlorure de calcium,
(b) l'appauvrissement de sels dans ladite suspension de chaux comprenant du chlorure de calcium de manière à obtenir une suspension de chaux appauvrie en sels,
(c) l'ajout d'une poudre de chaux et de morceaux de chaux à la suspension de chaux appauvrie en sels pour obtenir une masse humide et éventuellement l'ajout d'eau, la poudre de chaux ayant une distribution granulométrique **caractérisée par** une valeur d₅₀ de 0,01 mm à 0,05 mm, et les morceaux de chaux ayant une distribution granulométrique **caractérisée par** une valeur d₅₀ de 0,2 à 5 mm,
(d) le mélange et la granulation de la masse humide pour obtenir un granulé humide, et
(e) le séchage du granulé humide pour obtenir un granulé sec ayant une teneur en humidité de 1 à 10 % en poids et une distribution granulométrique **caractérisée par** une valeur d₅₀ de 1 à 3 mm,
et dans lequel ladite suspension de chaux fournie dans l'étape (a) comprend des déchets de distillerie résultant de l'étape de régénération d'ammoniac dans un procédé de production de carbonate de sodium selon le procédé Solvay, et la suspension de chaux est faite de matière solide en suspension dans une solution aqueuse, et ladite matière solide comprend :
- au moins 1 et au plus 70 % en poids de chaux exprimée en Ca(OH)₂,
- au moins 5 et au plus 60 % en poids de carbonate de calcium exprimé en CaCO₃,
- au moins 1 et au plus 40 % en poids de sulfate de calcium exprimé en CaSO₄,
- au plus 15 % en poids d'hydroxyde de magnésium exprimé en Mg(OH)₂,
- au plus 40 % en poids, de préférence au plus 30 % en poids ou au plus 20 % en poids d'autres minéraux comprenant de la silice, tels que : silice, argiles, silicate de fer, silicate d'aluminium, ou ettringite et leurs mélanges,
et de sorte que la somme des composants solides ci-dessus soit de 100 % en poids.

2. Procédé selon la revendication 1, dans lequel les solides mis en suspension dans la solution aqueuse ont une valeur d₉₀ d'au plus 300 µm.

3. Procédé selon l'une quelconque des revendications précédentes, dans lequel la matière solide comprend au moins 0,1 et au plus 15 % en poids de CaCl₂.

4. Procédé selon l'une quelconque des revendications précédentes, dans lequel ladite poudre de chaux et lesdits morceaux de chaux sont des sous-produits d'un procédé de production de soude selon le procédé Solvay tels que : de la poudre de chaux récupérée d'un dépoussiérage pendant le broyage de la chaux, ou des morceaux de chaux prélevés du broyage de la chaux avant la production de lait de chaux.

5. Procédé selon l'une quelconque des revendications précédentes, dans lequel l'étape (b) comprend le lavage de la suspension de chaux avec de l'eau.

6. Procédé selon la revendication 1, dans lequel la suspension de chaux appauvrie en sels obtenue dans l'étape (a) a une teneur en solides de 20 à 50 % en poids.

7. Procédé selon l'une quelconque des revendications précédentes, dans lequel le granulé humide obtenu dans l'étape (d) a une teneur en humidité d'au moins 12 % en poids et d'au plus 40 % en poids.

8. Procédé selon l'une quelconque des revendications précédentes, dans lequel le granulé humide obtenu dans l'étape (d) a une teneur en humidité d'au plus 30 % en poids ou d'au plus 25 % en poids.

9. Procédé selon l'une quelconque des revendications précédentes, dans lequel le rapport pondéral des morceaux de chaux sur la poudre de chaux à l'étape (c) ou (d) est d'au moins 1:2 et d'au plus 1:20.

10. Procédé selon l'une quelconque des revendications précédentes, dans lequel le rapport pondéral de la suspension aqueuse de chaux sur la somme des morceaux de chaux et de la poudre de chaux est d'au moins 1: 1,5 et d'au plus 1:9.

11. Procédé selon la revendication précédente, dans lequel, aux étapes (c) ou (d), les plages de poids :
- de suspension aqueuse de chaux est de 10 à 40 % en poids
- de morceaux de chaux est de 5 à 20 % en poids
- de poudre de chaux est de 40 à 85 % en poids
et de sorte que la somme des trois constituants ci-dessus soit de 100 % en poids.

12. Utilisation du granulé sec obtenu dans le procédé selon l'une quelconque des revendications précédentes comme engrais à base de chaux, dans laquelle ledit granulé sec comprend au moins 25 % en poids de chaux exprimée en Ca(OH)₂, et a une teneur en humidité de 1 à 10 % en poids et a une distribution granulométrique **caractérisée par** une valeur d₅₀ de 1 à 3 mm.
